(19) Europäisches Patentamt
European Patent Office
Office européen des brevets

(11) Veröffentlichungsnummer: **0 442 096 A2**

# (12) EUROPÄISCHE PATENTANMELDUNG

(21) Anmeldenummer: **90124491.3**

(51) Int. Cl.5: **H04N 7/13**

(22) Anmeldetag: **18.12.90**

(30) Priorität: **16.02.90 DE 4004857**

(43) Veröffentlichungstag der Anmeldung:
**21.08.91 Patentblatt 91/34**

(84) Benannte Vertragsstaaten:
**DE FR GB IT SE**

(71) Anmelder: **ROBERT BOSCH GmbH**
**Postfach 10 60 50**
**W-7000 Stuttgart 10(DE)**

(72) Erfinder: **Krage, Heinz-Joseph**
**Gerlandstrasse 38**
**W-3200 Hildesheim(DE)**
Erfinder: **Amor, Hamed, Dr.**
**Bischof Gerhard-Strasse 30**
**W-3200 Hildesheim(DE)**

(74) Vertreter: **Eilers, Norbert, Dipl.-Phys.**
**Blaupunkt-Werke GmbH, Patente und Lizenzen, Robert-Bosch-Strasse 200**
**W-3200 Hildesheim(DE)**

## (54) Einrichtung zur bandbreitenreduzierenden Codierung von Videosignalen.

(57) Bei einer Einrichtung zur bandbreitenreduzierenden Codierung von Videosignalen werden die Videosignale bezüglich ihrer Frequenz in mehrere Teilbänder aufgespalten. Auf die in den Teilbändern jeweils vorliegenden Signale werden verschiedene Datenreduktionsverfahren angewendet. Die Aufspaltung erfolgt in ein erstes Teilband (Tiefpaß-Teilband) und mindestens ein weiteres Teilband (Hochpaß-Teilband).

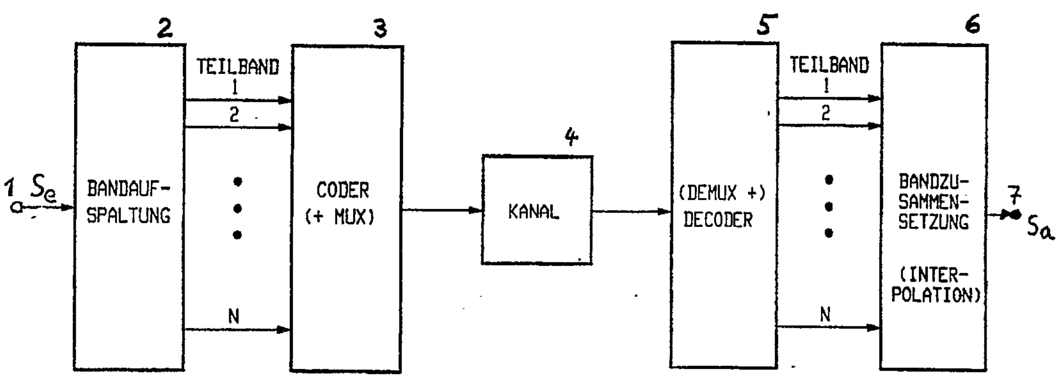


Fig. 1

EP 0 442 096 A2

# EINRICHTUNG ZUR BANDBREITENREDUZIERENDEN CODIERUNG VON VIDEOSIGNALEN

Die Erfindung geht aus von einer Einrichtung nach der Gattung des Hauptanspruchs.

Die digitale Übertragung von Videosignalen führt bekanntlich zu sehr hohen Datenraten. So sind beispielsweise zur digitalen Übertragung eines Farbfernsehsignals des herkömmlichen Rundfunkfernsehens Datenraten im Bereich zwischen 100 bis 200 Mbit/s erforderlich. Ein standardisierter Übertragungskanal mit einer Kapazität von 140 Mbit/s kann also bei entsprechender Codierung zur Übertragung von Farbfernsehsignalen bei hoher Übertragungsqualität genutzt werden.

Zur digitalen Übertragung von Videosignalen beim hochauflösenden Fernsehen (HDTV) sind erheblich höhere Datenraten erforderlich. Aufgabe der vorliegenden Erfindung ist es, eine Reduzierung der zur digitalen Übertragung von Videosignalen erforderlichen Daten zu ermöglichen, so daß beispielsweise ein HDTV-Signal über einen 140-Mbit/s-Kanal ohne sichtbare Qualitätseinbuße geleitet werden kann.

Die erfindungsgemäße Einrichtung mit den kennzeichnenden Merkmalen des Hauptanspruchs hat den Vorteil, daß die Datenreduktion weitgehend an die Struktur des jeweils übertragenen Bildes angepaßt wird und somit eine relativ hohe Reduktion ohne sichtbare Qualitätsverschlechterung möglich wird. Dabei ist die Anwendung der erfindungsgemäßen Einrichtung nicht auf ein HDTV-Signal beschränkt, sondern ist überall dort möglich, wo Videosignale über Kanäle mit einer verhältnismäßig geringen Datenrate geleitet werden sollen.

Durch die Aufspaltung in Teilbänder erfolgt zunächst noch keine Datenreduktion; diese wird erst durch unterschiedliche Datenreduktionsverfahren innerhalb der Teilbänder möglich, wobei die Wahrnehmungseigenschaften des menschlichen Sehvermögens und die Signalstatistik in den Teilbändern (Frequenzbereichen) verschieden ausgenutzt werden.

Die Erfindung ist nicht auf eine Einrichtung zur Codierung beschränkt, sondern bezieht sich ferner auf eine Einrichtung zur Decodierung der mit der Einrichtung gemäß Hauptanspruch codierten Signale.

Durch die in den Unteransprüchen aufgeführten Maßnahmen sind vorteilhafte Weiterbildungen und Verbesserungen der im Hauptanspruch angegebenen Erfindung möglich.

Dabei sind Ausgestaltungen möglich, bei denen außer einem Tiefpaß-Teilband nur ein weiteres Teilband abgeleitet wird, oder solche, bei denen mehrere weitere Teilbänder vorgesehen sind. Aufgrund entsprechender Hochpaß- und Tiefpaß-Filterung in Zeilenrichtung und senkrecht zur Zeilenrichtung kann bei mehreren weiteren Teilbändern die weitere datenreduzierende Codierung in vorteilhafter Weise an die Struktur der in dem jeweiligen Teilband vorliegenden Signale angepaßt sein.

Für den Fall, daß nur ein weiteres Teilband vorgesehen ist, kann im Rahmen der Erfindung eine Erkennung der Struktur des jeweiligen Bildinhalts vorgesehen sein, damit die weitere datenreduzierende Codierung an diese Struktur angepaßt werden kann.

In beiden Fällen kann eine an die jeweilige Struktur angepaßte Sortierung der Übertragung einzelner Bildelemente im Zusammenhang mit einer Lauflängencodierung einen erheblichen Reduktionsfaktor erbringen.

Ausführungsbeispiele der Erfindung sind in der Zeichnung anhand mehrerer Figuren dargestellt und in der nachfolgenden Beschreibung näher erläutert. Es zeigt:

- Fig. 1 eine schematische Darstellung einer Übertragung eines Signals mit einer Bandaufspaltung und einer Teilbandcodierung bzw. -decodierung,
- Fig. 2 eine schematische Darstellung in der Frequenzebene zur Erläuterung der Aufspaltung eines Videosignals in vier Teilbänder,
- Fig. 3 eine Codiereinrichtung für das erste Teilband,
- Fig. 4 eine Codiereinrichtung für die weiteren Teilbänder gemäß einem ersten Ausführungsbeispiel,
- Fig. 5 schematische Darstellungen der Sortierung der Bildelemente in den weiteren Teilbändern,
- Fig. 6 eine schematische Darstellung der Aufspaltung in zwei Teilbänder gemäß einem zweiten Ausführungsbeispiel,
- Fig. 7 eine Einrichtung zur Codierung des hochfrequenten Teilbandes beim zweiten Ausführungsbeispiel,
- Fig. 8 eine Einrichtung zur Strukturerkennung beim zweiten Ausführungsbeispiel,
- Fig. 9 eine Sternerschaltung beim zweiten Ausführungsbeispiel,
- Fig. 10 eine weitere Einrichtung zur Strukturerkennung,
- Fig. 11 einen Decoder für Videosignale, welche in mehreren Teilbändern aufgespalten sind und bei denen die in den Teilbändern übertragenen Signale mit verschiedenen Datenreduktionsverfahren codiert sind,

Fig. 12 einen Decoder für Signale des ersten Teilbandes und

Fig. 13 einen Decoder für Signale eines der weiteren Teilbänder.

Gleiche Teile sind in den Figuren mit gleichen Bezugszeichen versehen. Die einzelnen Teilbänder werden im folgenden auch als Band I, II, III und IV bzw. Band II* bezeichnet.

Bei der Übertragungseinrichtung nach Fig. 1 wird das zu übertragende Videosignal $S_e$ von einem Eingang 1 einer Schaltung 2 zur Bandaufspaltung zugeführt. Beispiele für die Schaltung 2 werden später im Zusammenhang mit den Figuren 2b und 6b erläutert. Die Signale der Teilbänder 1 bis N werden getrennt einem Coder 3 zugeführt, dort codiert und anschließend in einem Multiplexer zu einem Datenstrom zusammengefaßt. Die über den Kanal 4 geleiteten Daten gelangen zu einem Decoder 5, der die Datenströme der Bänder 1 bis N trennt, sie decodiert und anschließend getrennt zur nächsten Stufe weiterleitet. In dieser Schaltung 6 werden die Signale der einzelnen Teilbänder wieder zusammengefaßt und stehen am Ausgang 7 als übertragenes Videosignal $S_a$ zur Verfügung.

Bei den in den Schaltungen 3 und 5 jeweils für die Teilbänder vorgenommenen Codierungen bzw. Decodierungen kann auf bekannte Verfahren zurückgegriffen werden, wie beispielsweise PCM (Puls-Code-Modulation), DPCM (Differenz-Puls-Code-Modulation), TC (Transformationscodierung), VQ (Vektorquantisierung). Es kann eine Intra- oder Interbandcodierung vorgenommen werden. Im Falle einer Intrabandcodierung werden Bildelemente nur eines Teilbandes gemeinsam codiert. Bei einer Interbandcodierung werden Bildelemente aus unterschiedlichen, gegebenenfalls allen Teilbändern gemeinsam codiert.

Welches Codierverfahren auf die Signale der einzelnen Teilbänder angewendet wird, hängt von der Eigenschaft der Signale in den Teilbändern ab. So entscheidet die Statistik der Teilbänder über die Methoden der Redundanzreduktion, während die Höhe der Frequenzen die Wahl der Methoden der Relevanzreduktion beeinflußt. Im allgemeinen ist nur ein Band (im folgenden das Band I) ein Tiefpaß-Teilband. Aufgrund der üblicherweise hohen Korrelation in einem solchen Band eignet sich eine Intraband-DPCM, -DCT oder -VQ in vorteilhafter Weise. Da das menschliche Auge auf Bildfehler in diesem Bereich empfindlich reagiert, ist durch Maßnahmen der Irrelevanzreduktion keine allzu große Datenreduktion erreichbar.

Die anderen Teilbänder sind im allgemeinen Hochpaß-Teilbänder, bei welchen die Korrelation benachbarter Bildelemente sehr gering ist, so daß eine Redundanzreduktion nur zu einem geringen Grad ausgeführt werden kann. In diesen Bereichen ist jedoch das menschliche Auge unempfindlich, so daß eine stärkere Irrelevanzreduktion, beispielsweise durch gröbere Quantisierung, erreicht werden kann.

Fig. 2a zeigt beispielhaft die Definitionsbereiche der einzelnen Teilbänder bei einer Aufspaltung in vier Teilbänder. Die Darstellung erfolgt in der Ortsfrequenzebene, wobei $f_x$ die Frequenz in der Zeilenrichtung bzw. in horizontaler Richtung und $f_y$ die Frequenz senkrecht zur Zeilenrichtung bzw. in vertikaler Richtung darstellt.

Das Band I ist durch Tiefpaß-Filterung der Videosignale sowohl in horizontaler als auch vertikaler Richtung abgespalten. Das Band II beinhaltet horizontale Tiefpaß-Komponenten und vertikale Hochpaß-Komponenten, während das Band III horizontale Hochpaß-Komponenten und vertikale Tiefpaß-Komponenten umfaßt. Das Band IV entsteht durch Hochpaß-Filterung in beiden Richtungen.

Grobe Strukturen in einem zu übertragenden Bild haben beispielsweise wesentliche Signalanteile in Band I zur Folge. Ein waagerechtes relativ feines Strichraster dagegen bewirkt Komponenten im Band II. In entsprechender Weise wird ein senkrechtes Strichraster im wesentlichen mit Komponenten im Band III übertragen, während im Band IV der Informationsinhalt von Strukturen zu finden ist, die sowohl horizontal als auch vertikal geringe Abmessungen aufweisen.

Die in Fig. 2a dargestellte Bandaufspaltung kann mit verschiedenen Filtern durchgeführt werden. Ein Beispiel dafür ist in Fig. 2b dargestellt. Vom Eingang 11 gelangen die aufzuspaltenden Signale $S_e$ zu einem horizontal wirksamen Tiefpaß-Filter 12. Parallel dazu werden die Signale $S_e$ über ein ebenfalls horizontal wirksames Hochpaß-Filter 13 geleitet. Durch Unterabtastung bei 14 und 15, beispielsweise durch Weiterleitung nur jedes zweiten Abtastwertes, werden die Ausgangssignale der Filter 12, 13 in die Basisbänder transformiert.

Das tiefpaßgefilterte Signal wird anschließend über ein vertikal wirksames Tiefpaß-Filter 17 geleitet, wodurch nach nochmaliger Unterabtastung bei 18 am Ausgang 19 das Signal des Bandes I ansteht. Von einem horizontal wirksamen Hochpaß-Filter 20 und einer Unterabtastung 21 wird ein Signal im Band II gebildet, das am Ausgang 22 anliegt.

Die Ausgangssignale der Schaltung 15 werden mit Hilfe eines weiteren vertikal wirksamen Tiefpaß-Filters 23, eines vertikal wirksamen Tiefpaß-Filters 24 und weiterer Schaltungen 25, 26 zur Unterabtastung in Signale der Bänder III und IV aufgespalten, die von den Ausgängen 27, 28 abnehmbar sind. Eine derartige Schaltung ist durch P. H. Westerink "Subband Coding of Images", Dissertation an der Technischen Universität Delft, Oktober 1989 bekanntgeworden und dort eingehend beschrieben.

Fig. 3 zeigt ein Blockschaltbild einer Einrichtung zur Codierung von Signalen im Band I. Dem Eingang 31 sind diese Signale von der Schaltung 2 (Fig. 1) zur Bandaufspaltung, insbesondere vom Ausgang 16 (Fig. 2b) zuführbar. In einer Schaltung 32 wird der zeilenweise ankommende Datenstrom in Blockdaten zu beispielsweise 8x8-Blöcken umgesetzt. Diese Umsetzung ist an sich im Zusammenhang mit Datenreduktionsverfahren bekannt und braucht wie auch die folgenden Schritte zum Verständnis der vorliegenden Erfindung nicht näher erläutert zu werden. Im Anschluß daran erfolgt bei 33 für jeweils einen Datenblock eine diskrete Cosinustransformation (DCT). Dabei entstehen in an sich bekannter Weise für jeweils einen Datenblock ein DC-Koeffizient und AC-Koeffizienten.

Der DC-Koeffizient wird einer Differenz-Puls-Code-Modulation (DPCM) bei 34 unterworfen und anschließend bei 35 durch eine eigens dafür optimierte Huffman-Tabelle VLC-codiert (VLC = variable length code). Die AC-Koeffizienten werden durch unterschiedliche nichtlineare Kennlinien quantisiert, wobei die Auswahl der Kennlinien an den Füllstand eines in der Schaltung 36 befindlichen Pufferspeichers angepaßt wird. Die Quantisierung selbst erfolgt in einer Schaltung 37. Die somit quantisierten Daten werden anschließend in weiteren Schaltungen 38 und 39 lauflängen- (RL) und Huffman-codiert (VLC).

In einer Schaltung 36 werden die codierten DC-Koeffizienten und AC-Koeffizienten aller vier Bänder zu einem Datenstrom zusammengefaßt. Außerdem befinden sich in der Schaltung 36 ein Pufferspeicher und verschiedene Steuereinrichtungen. Über einen parallelen Eingang 40 werden - schematisch - die Bänder II bis IV der Luminanz und alle vier Bänder der Chrominanz der Schaltung 36 zugeführt. Dem Ausgang 41 kann der serielle Datenstrom zur Übertragung über den Kanal 4 (Fig. 1) entnommen werden.

Die Daten der Bänder II bis IV sind nur wenig korreliert, daher wird bei einer Codierung dieser Daten von einer Redundanzreduktion - ähnlich der im Zusammenhang mit Fig. 3 beschriebenen - abgesehen. Bei dem Ausführungsbeispiel ist jedoch auch eine blockweise Verarbeitung vorgesehen, wodurch eine gleiche Verarbeitungsgüte in dem Block für alle Bänder hergestellt wird. Außerdem wird durch die blockweise Verarbeitung auch die Weiterverarbeitung der Daten, wie beispielsweise das Multiplexen und das Demultiplexen der Teilbänder, die Steuerung des Pufferspeichers und die Übertragung der Daten in einem bestimmten Übertragungsrahmen vereinfacht. Deshalb ist bei der Schaltung zur Codierung von Signalen der Bänder II bis IV gemäß Fig. 4 nach dem Eingang 45 zunächst eine Schaltung 46 zur Blockbildung vorgesehen.

Es schließt sich eine Schaltung 47 an, welche eine Sortierung der Bildelemente eines Blockes vornimmt. Diese Sortierung erfolgt im Hinblick darauf, daß bei der später vorzunehmenden Lauflängencodierung möglichst lange Nullenfolgen vorliegen. Der Reduktionsfaktor ist nämlich bei einer Lauflängencodierung umso größer, je größer nach der adaptiven Quantisierung bei 48 die zu codierenden Lauflängen sind. Die Sortierung der Blockdaten ist an die in den Teilbändern zu erwartenden Strukturen angepaßt. Im Band III sind beispielsweise durch die Filterung überwiegend vertikale Strukturen zu finden. Es wird daher in diesem Band eine Umsortierung durchgeführt, bei welcher die Daten von vertikal zueinander liegenden Bildelementen zeitlich nacheinander übertragen werden. Bevor eine weitere Erläuterung der Sortierung im Zusammenhang mit Fig. 5 erfolgt, wird die Beschreibung des Blockschaltbildes nach Fig. 4 fortgesetzt. Nach dem adaptiven Quantisierer 48 ist ein Lauflängencoder 49 und danach ein Huffman-Coder 50 angeordnet. Die Ausgangssignale des Huffman-Coders 50 werden der Schaltung 36 zugeführt, die bereits im Zusammenhang mit Fig. 3 beschrieben wurde und der über den Eingang 40' die codierten Signale des Luminanz-Bandes I und ein codiertes Chrominanzsignal (alle vier Bänder) zugeführt werden.

Fig. 5 zeigt schematisch den Sortiervorgang der Daten von 8x8 Bildelementen eines Blocks für die Bänder II, III und IV. Die Signale im Band II repräsentieren im wesentlichen horizontale Strukturen und werden deshalb auch in dieser Richtung sortiert. Die Daten aus Band II, die sich auf jeweils eine Zeile der Bildelemente eines Blocks beziehen, haben zumeist die gleichen Werte, so daß durch die Run-length-Codierung erst vom Übergang von einer Zeile auf die nächste ein Koeffizient übertragen werden muß - vorausgesetzt die Struktur ist so fein, daß sich von einer Zeile zur anderen bereits ein Unterschied ergibt.

Bei den Signalen im Band III wird eine senkrechte Sortierung vorgenommen entsprechend den durch die Signale im Band III verkörperten vertikalen Strukturen. Schließlich erfolgt für die Signale im Band IV eine diagonale Sortierung, da im Band IV im wesentlichen diagonal ainsgerichtete Bildinhalte übertragen werden.

Bei einem weiteren Ausführungsbeispiel werden die zu übertragenden Videosignale in lediglich zwei Bänder aufgespalten, was in Fig. 6 schematisch dargestellt ist. Dabei entspricht das Band I im wesentlichen dem Band I, das bereits im zusammenhang mit Fig. 2 beschrieben wurde, während das Band II* alle höheren Frequenzen unabhängig von der Richtung umfaßt.

Ein Beispiel eines Filters für eine derartige Aufspaltung ist in Fig. 6b dargestellt. An den Eingang 51 sind zwei Filter 52, 53 angeschlossen. Das Filter 52 hat sowohl in vertikaler als auch horizontaler Richtung eine Tiefpaß-Charakteristik, während das Filter 53 in horizontaler und vertikaler Richtung als Hochpaß wirksam ist. Anschließend erfolgt in zwei Schaltungen 54, 55 eine Unterabtastung, damit die an den Ausgängen 56, 57 anstehenden Signale im Basisband zur Verfügung stehen.

Die Codierung der Signale im Band I (Fig. 6) erfolgt entsprechend Fig. 3. Bei der Codierung des Bandes II* ist jedoch zu berücksichtigen, daß im Band II* keine Strukturausrichtung vorherrscht, sondern je nach vorliegendem Bildinhalt wechselt. Daran wird die Sortierung bei der Codierung gemäß Fig. 7 angepaßt. Gegenüber der Einrichtung nach Fig. 4 weist daher die Einrichtung zur Codierung von Signalen im Band II* gemäß Fig. 7 zusätzlich eine Schaltung 61 zur Strukturerkennung, eine adaptive Sortierschaltung 62 und eine Steuerschaltung 63 auf. Mittels der Strukturerkennung wird ein Maß für das Vorkommen von vertikalen, horizontalen oder diagonalen Strukturen gesucht. Der kleinste Wert dieses Maßes entscheidet über die Wahrscheinlichkeit des Vorhandenseins einer bestimmten Strukturausrichtung. Ein einfach zu ermittelndes Kriterium für die Erkennung einer bestimmten Struktur ist - hier beispielhaft dargestellt - das Minimum der Summe aller Differenzbeträge aufeinander folgender Bildelemente. Das Ausgangssignal der Strukturerkennungsschaltung 61 steuert über die Steuerschaltung 63 die adaptive Quantisierung und die Sortierung. Aus dem Füllstand des in der Schaltung 36 enthaltenen Pufferspeichers wird eine weitere Steuergröße für die adaptive Quantisierung gewonnen.

Fig. 8 zeigt die Strukturerkennung 61 in detaillierterer Darstellung. Die Schaltung besteht aus einem Blockspeicher 66, der von einem schnellen Dual-Port-RAM gebildet ist, das den eigentlichen Speicher 67, einen Datenmultiplexer 68 und einen Adreßmultiplexer 69 enthält. Außerdem weist die Schaltung zur Strukturerkennung ein Rechenwerk auf, das aus einer Schaltung 70 zur Bildung des Betrags der Differenz zweier nacheinander aus dem Speicher 66 ausgelesener Werte und aus einer Akkumulatorschaltung 71 besteht.

Der Ausgang der Akkumulatorschaltung 71 ist mit der Steuerschaltung 63 verbunden, die über Adressenzähler 72, 73 die Schreib- und Leseadressen für den Blockspeicher 66 erzeugt. Ausgänge 74, 75 der Steuerschaltung sind mit entsprechenden Eingängen des adaptiven Quantisierers 48 und der Sortierschaltung 62 verbunden.

Die Daten jeweils eines Blocks werden über den Eingang 65 zugeführt. Von der Steuerschaltung 63 gesteuert, erzeugt der Lese-Adressenzähler 73 entsprechend den verschiedenen Sortierungen unterschiedliche Auslesefolgen der Daten aus dem Blockspeicher 66. Für jeweils eine Auslesefolge wird mit Hilfe des Rechenwerks die Summe der Beträge der Differenzen zweier aus dem Blockspeicher nacheinander ausgelesener Bildelemente gebildet. Diejenige Sortierung, für welche die kleinste Summe ermittelt wird, wird an die Sortierschaltung 62 (Fig. 7) gemeldet.

Über einen weiteren Ausgang 76 werden vom Blockspeicher die noch nicht sortierten Daten an den adaptiven Quantisierer 48 weitergeleitet. Entsprechend der von der Steuerschaltung 63 an die Sortierschaltung 62 geleiteten Steinerdaten wird der Block so umsortiert, daß der anschließende Lauflängencoder 49 maximale Lauflängen zu codieren hat und dadurch eine maximale Datenreduktion erreicht wird.

Außer der Struktur in einem Block kann auch die sogenannte Aktivität eines Blocks aus der Summe der Differenzbeträge abgelesen werden. Dieser Betrag ist umso größer, je mehr Strukturen in dem entsprechenden Teil des Bildes vorhanden sind. Als Maß für die Aktivität kann daher das Maximum der ermittelten Summen dienen. Mit Rücksicht auf Wahrnehmungsfähigkeiten des menschlichen Auges müssen Blöcke mit geringer Aktivität feiner quantisiert werden, da in diesem Fall bereits geringe Quantisierungsverzerrungen sichtbar sind. Diese werden bei Vorliegen von Aktivität innerhalb des Blocks überdeckt, so daß dann eine gröbere Quantisierung vorgesehen werden kann.

Außerdem kann bei der Quantisierung durch eine relativ große Schwelle im Bereich des Nullwertes eine Rauschbefreiung vorgenommen werden. Zusätzlich wird die Quantisierungskennlinie in Abhängigkeit vom augenblicklichen Füllstand des Pufferspeichers in der Schaltung 36 gesteuert. Diese Maßnahme als solche ist beispielsweise in der Patentanmeldung P 38 34 476.9 der Anmelderin genauer beschrieben.

Fig. 9 zeigt ein Blockschaltbild der Steuerschaltung 63 (Fig. 7, Fig. 8). Sie ist als Mikroprogrammsteuerung realisiert und besteht im wesentlichen aus einem integrierten Steuerwerk, einem sogenannten SAM-Barnstein 81 (stand alone microsequencer), der beispielsweise unter der Bezeichnung EPS 448 von der Firma ALTERA erhältlich ist. In diesem integrierten Schaltkreis sind sowohl ein Programmspeicher mit den Pipeline-Registern als auch der eigentliche Sequencer und ein Condition-Code-Multiplexer enthalten. In einer 16-bit-ALU 82 werden die Ergebnisse aller Rechenwerke, die über einen Eingang 94 zugeführt werden, gespeichert und miteinander verglichen. Eine geeignete 16-bit-ALU wird beispielsweise unter der Bezeichnung CY 7C 9101 von der Firma Cypress angeboten. Über den Datenmultiplexer 83 und die Eingänge 85 und 86 werden auch der Pufferfüllstand und der benötigte Schwellwert in die ALU geladen und bei weiteren Berechnungen verwendet. Über die Ausgänge des SAM-Bausteins 81 werden die Steuersignale für die Quantisierungskennlinie und die Sortierung sowie die Steuersignale für die Adressenzähler 72, 73 (Fig. 8) abgegeben. Über einen Interrupt-Eingang 88 wird ein Signal zugeführt, das beispielsweise den Beginn jeweils eines Datenblocks kennzeichnet.

Bei der Einrichtung nach Fig. 8 erfolgt die Berechnung der Summe der Beträge der Differenzen für die verschiedenen Sortierungen nacheinander. Dabei sind hohe Datenverarbeitungsgeschwindigkeiten erforderlich. Bei der Einrichtung nach Fig. 10 wird die Ermittlung der Summe der Beträge der Differenzen für verschiedene Sortierungen parallel durchgeführt, so daß eine im Verhältnis zur Bearbeitungsgeschwindigkeit der übrigen Teile der erfindungsgemäßen Einrichtung langsamere Geschwindigkeit genügt. Für jede der vorgesehenen Sortierungen ist dabei ein Blockspeicher 91 bis 94 und ein Rechenwerk 95 bis 98 vorgesehen. Die Daten werden allen Blockspeichern über einen Eingang 99 zugeführt und lediglich von einem (z. B. dem ersten) Blockspeicher über den Ausgang 100 zum Quantisierer 48 (Fig. 7) weitergeleitet. Die Steinerschaltung 101 ist ähnlich der Steinerschaltung 63 aufgebaut und gibt an ihren Ausgängen 102 und 103 Steuersignale für den Quantisierer 48 und die Sortierschaltung 62 (Fig. 7) ab. In Fig. 10 sind zusätzlich schematisch die verschiedenen Sortierungen dargestellt.

Fig. 11 zeigt einen Decoder für Videosignale, welche in mehreren Teilbändern aufgespalten sind und bei denen die in den Teilbändern übertragenen Signale mit verschiedenen Datenreduktionsverfahren codiert sind. Von einem nicht dargestellten Übertragungskanal gelangen die übertragenen Signale zu einem Eingang 111 des Decoders. In einem Kanaldemultiplexer 112 werden Video- und Audiosignale voneinander getrennt. Die Videosignale gelangen in einen Videodemultiplexer 113, an dessen Ausgang Signale in den Bändern I bis IV anstehen. Für jedes dieser Signale ist ein Decoder 114 bis 117 vorgesehen. Die Ausgangssignale der Decoder 114 bis 117 werden in einer Schaltung zur Bandzusammensetzung 118 zusammengesetzt und stehen am Ausgang 119 als digitales Videosignal zur Verfügung.

Ein Beispiel für den Decoder 114 für das Band I ist in Fig. 12 ebenfalls als Blockschaltbild dargestellt. Auf den Eingang 121 folgt ein Demultiplexer 143 zur Trennung der DC-Koeffizienten von den AC-Koeffizienten. Entsprechend der Codierung gemäß Fig. 3 erfolgt eine Decodierung der DC-Koeffizienten zunächst durch eine Huffman-Decodierung 123 und danach durch eine DPCM-Decodierung 124. Die AC-Koeefizienten werden zunächst huffmandecodiert 125, worauf eine Larnflängendecodierung 126 und eine Rück-Quantisierung 127 erfolgen. Bei letzterer werden aus den lauflängendecodierten Signalen Amplitudenwerte gewonnen, welche der jeweiligen Quantisierungsstufe entsprechen, wobei die bei der Codierung vorgenommene Adaption der Quantisierungskennlinie berücksichtigt bzw. kompensiert wird.

Die Ausgangssignale der Schaltungen 124 und 127 werden einer inversen diskreten Cosinustransformation 128 zugeführt, deren Ausgangssignale noch blockweise vorliegen. Um diese in die üblichen zeilenweise sortierten Videosignale umzusetzen, ist eine Schaltung 129 vorgesehen, die entsprechende Speicher und Adressengeneratoren enthält. Vom Ausgang 130 werden die Signale des Bandes I zur Schaltung 118 (Fig. 11) geführt.

Fig. 13 zeigt ein Blockschaltbild für einen der Decoder 115 bis 117 (Fig. 11). Die dem Eingang 131 zugeführten Signale des jeweiligen Bandes werden über einen Huffman-Decoder 132, einen Lauflängendecoder 133 und einen Rück-Quantisierer 134 geleitet. Im Anschuß daran erfolgt in einer Schaltung 135 eine Rücksortierung, um die in der Schaltung 47 (Fig. 4) erfolgte Sortierung wieder aufzuheben. Nach einer Block/Zeilenumsetzung bei 136 werden die decodierten Signale des Bandes II bzw. III oder IV über den Ausgang 137 der Schaltung 118 (Fig. 11) zugeführt.

## Patentansprüche

1. Einrichtung zur bandbreitenreduzierenden Codierung von Videosignalen, dadurch gekennzeichnet, daß die Videosignale bezüglich ihrer Frequenz in mehrere Teilbänder aufgespalten werden und daß auf die in den Teilbändern jeweils vorliegenden Signale verschiedene Datenreduktionsverfahren angewendet werden.

2. Einrichtung nach Anspruch 1, dadurch gekennzeichnet, daß die Aufspaltung in ein erstes Teilband (Tiefpaß-Teilband) und mindestens ein weiteres Teilband (Hochpaß-Teilband) erfolgt.

3. Einrichtung nach Anspruch 2, dadurch gekennzeichnet, daß das erste Teilband durch in Zeilenrichtung und senkrecht zur Zeilenrichtung wirksame Tiefpaß-Filterung gebildet wird.

4. Einrichtung nach Anspruch 3, dadurch gekennzeichnet, daß ein weiteres Teilband (II*) durch Hochpaß-Filterung gebildet wird, welche mindestens Signale mit tiefen Frequenzen sowohl in Zeilenrichtung als auch senkrecht zur Zeilenrichtung unterdrückt.

5. Einrichtung nach Anspruch 3, dadurch gekennzeichnet, daß ein zweites Teilband (II) durch Tiefpaß-Filterung in Zeilenrichtung und Hochpaß-Filterung senkrecht zur Zeilenrichtung, ein drittes Teilband (III) durch Hochpaß-Filterung in Zeilenrichtung und Tiefpaß-Filterung senkrecht zur Zeilenrichtung und ein viertes Teilband (IV) durch Hochpaß-Filterung in Zeilenrichtung und senkrecht zur Zeilenrichtung gebildet wird.

**6.** Einrichtung nach Anspruch 2, dadurch gekennzeichnet, daß mehrere Bildelemente der Signale des ersten Teilbandes (I) blockweise codiert werden.

**7.** Einrichtung nach Anspruch 6, dadurch gekennzeichnet, daß die blockweise Codierung eine diskrete Cosinus-Transformation, eine Differenz-Puls-Code-Modulation und eine Lauflängencodierung umfaßt.

**8.** Einrichtung nach Anspruch 7, dadurch gekennzeichnet, daß der Gleichspannungsanteil eines jeden Blocks einer Differenz-Puls-Code-Modulation und anschließend einer Huffman-Codierung unterworfen ist und daß für Wechselspannungskoeffizienten eine adaptive Quantisierung, eine Lauflängencodierung und eine Huffman-Codierung vorgesehen sind.

**9.** Einrichtung nach Anspruch 6, dadurch gekennzeichnet, daß ferner Signale der weiteren Teilbänder (II, III, IV; II*) jeweils einer blockweisen Codierung einschließlich einer Lauflängencodierung unterworfen sind.

**10.** Einrichtung nach Anspruch 9, dadurch gekennzeichnet, daß die lauflängencodierten Signale anschließend einer Huffman-Codierung unterworfen sind.

**11.** Einrichtung nach Anspruch 9, dadurch gekennzeichnet, daß nach einer Blockbildung die jeweils einen Block bildenden Bildelemente vor der Zuführung zu einer weiteren Codierung entsprechend den in dem jeweiligen Teilband vorherrschenden Strukturen sortiert werden.

**12.** Einrichtung nach Anspruch 11, dadurch gekennzeichnet, daß bei einem Teilband, das Strukturen mehrerer Richtungen umfasssen kann, eine Einrichtung (61) zur Strukturerkennung vorgesehen ist, welche eine Einrichtung zum Sortieren der Bildelemente steuert.

**13.** Einrichtung nach Anspruch 12, dadurch gekennzeichnet, daß in der Einrichtung (61) zur Strukturerkennung die Signale der Bildelemente, die jeweils einen Block bilden, auf verschiedene Arten sortiert aus einem Zwischenspeicher (66; 91 bis 94) ausgelesen und einem Rechenwerk (70, 71; 95 bis 98) zugeführt werden und daß diejenige Sortierung mit der kleinsten Summe der Beträge der Differenzen zwischen den Signalen zweier aufeinander folgender Bildelemente der weiteren Codierung zugrundegelegt wird.

**14.** Einrichtung nach Anspruch 13, dadurch gekennzeichnet, daß das auf verschiedene Art sortierte Auslesen und das Berechnen der Summe sequentiell erfolgt.

**15.** Einrichtung nach Anspruch 13, dadurch gekennzeichnet, daß das auf verschiedene Art sortierte Auslesen und das Berechnen der Summe simultan erfolgt.

**16.** Einrichtung nach Anspruch 13, dadurch gekennzeichnet, daß ferner die größte Summe als Maß für die Aktivität im jeweiligen Block festgestellt wird.

**17.** Einrichtung nach Anspruch 16, dadurch gekennzeichnet, daß eine Quantisierungskennlinie in Abhängigkeit von der Aktivität des Blocks gesteuert wird.

**18.** Einrichtung zur Decodierung von Videosignalen, welche in mehreren Teilbändern aufgespalten sind und bei denen die in den Teilbändern übertragenen Signale mit verschiedenen Datenreduktionsverfahren codiert sind, dadurch gekennzeichnet, daß für jedes Teilband ein Decoder vorgesehen ist und daß die Ausgangssignale der Decoder zu einem Videosignal zusammengefaßt werden.

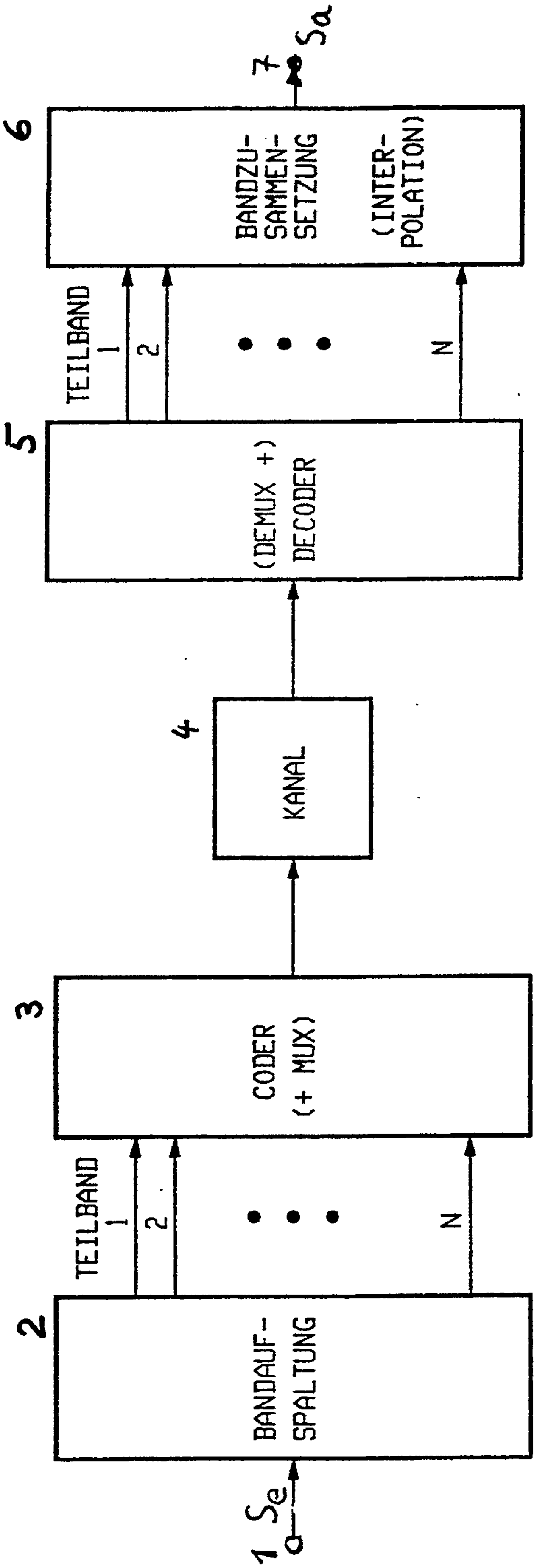
1
$S_e$
2
BANDAUF-
SPALTUNG
TEILBAND
1
2
N
3
CODER
(+ MUX)
4
KANAL
5
(DEMUX +)
DECODER
TEILBAND
1
2
N
6
BANDZU-
SAMMEN-
SETZUNG
(INTER-
POLATION)
7
$S_a$

Fig.1

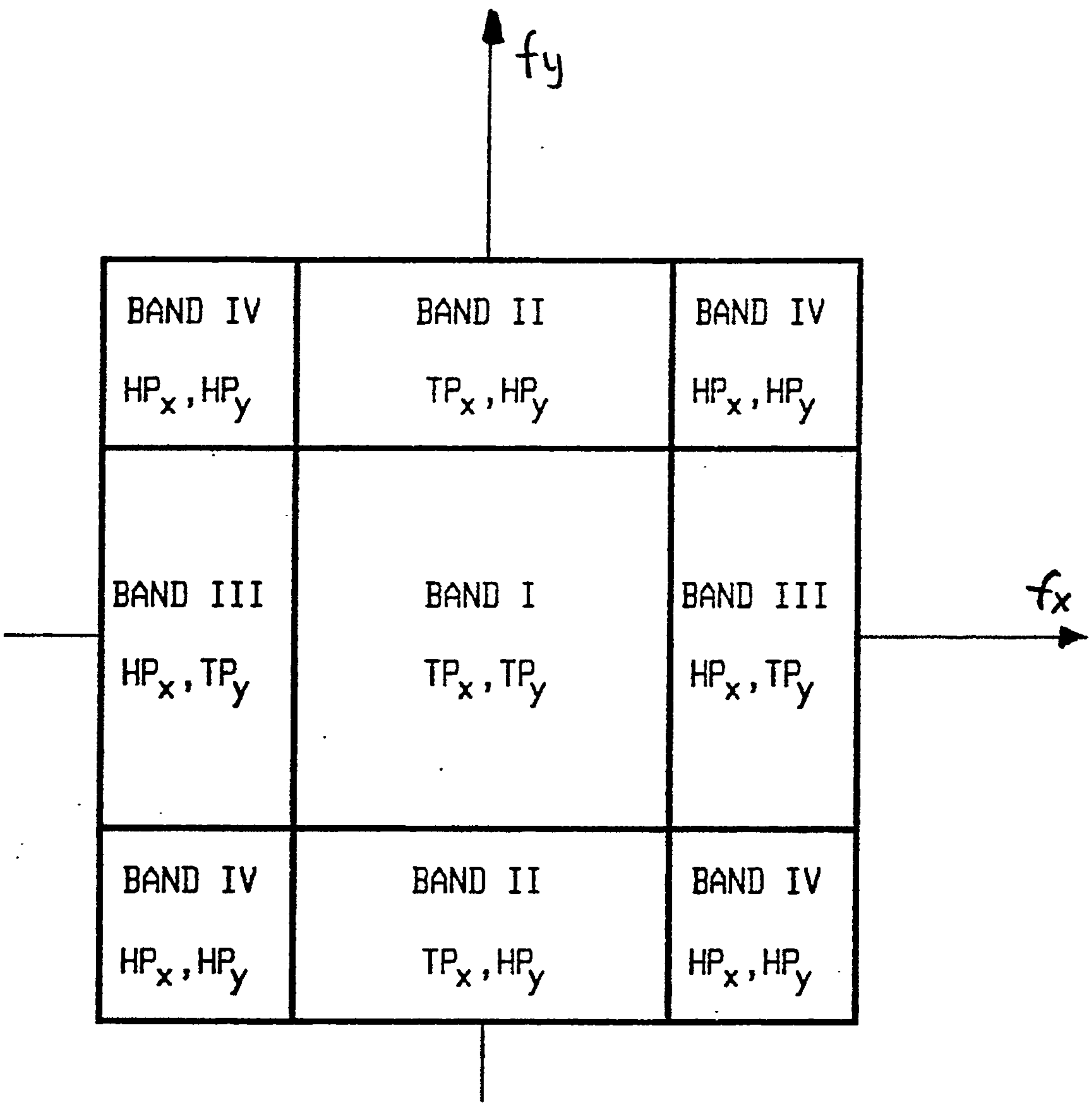
fy
fx
BAND IV
HPx , HPy
BAND II
TPx , HPy
BAND IV
HPx , HPy
BAND III
HPx , TPy
BAND I
TPx , TPy
BAND III
HPx , TPy
BAND IV
HPx , HPy
BAND II
TPx , HPy
BAND IV
HPx , HPy

Fig. 2a

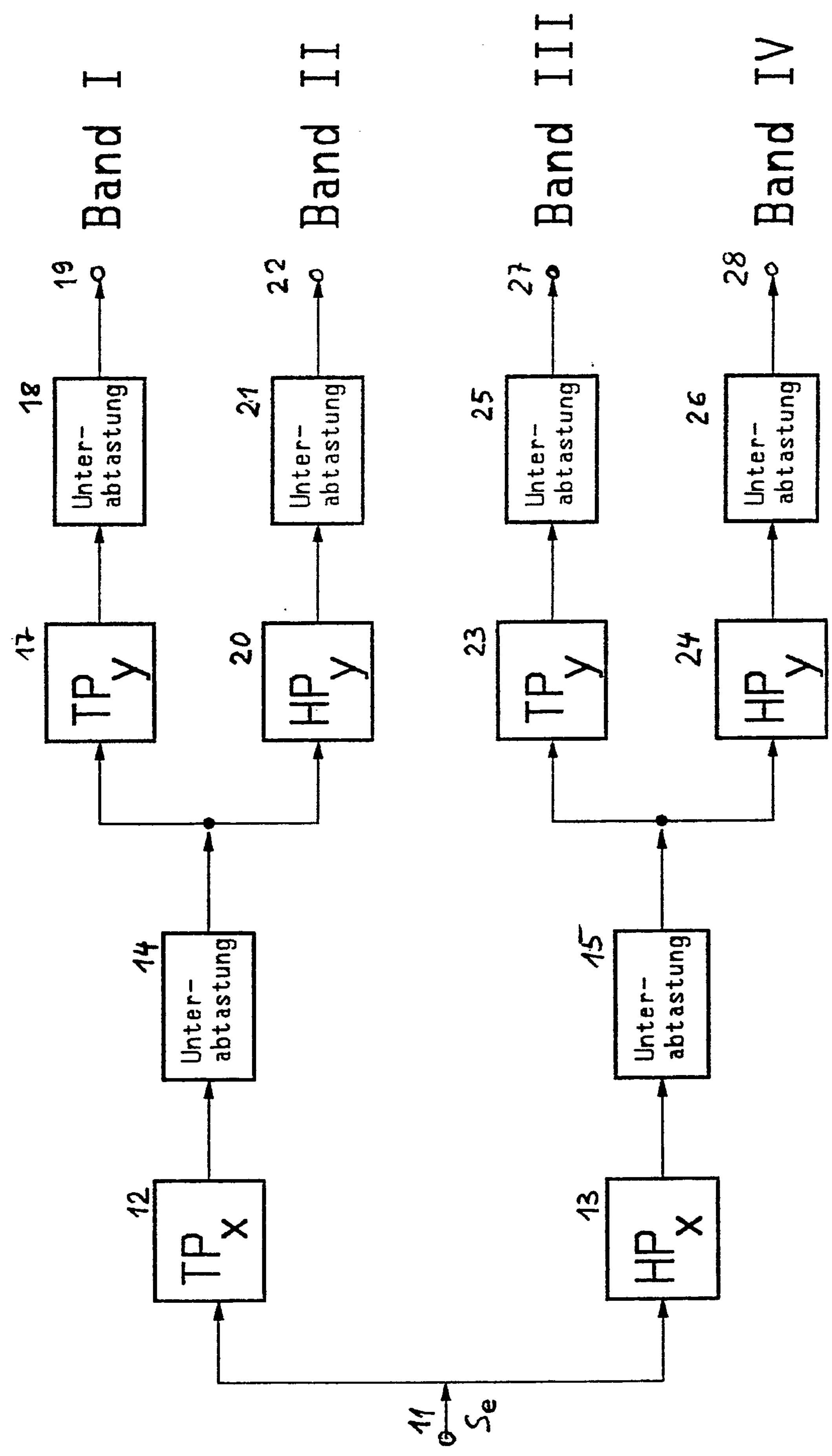

11
$S_e$
TPx
12
HPx
13
Unter-abtastung
14
Unter-abtastung
15
TPy
17
HPy
20
TPy
23
HPy
24
Unter-abtastung
18
Unter-abtastung
21
Unter-abtastung
25
Unter-abtastung
26
19
22
27
28
Band I
Band II
Band III
Band IV

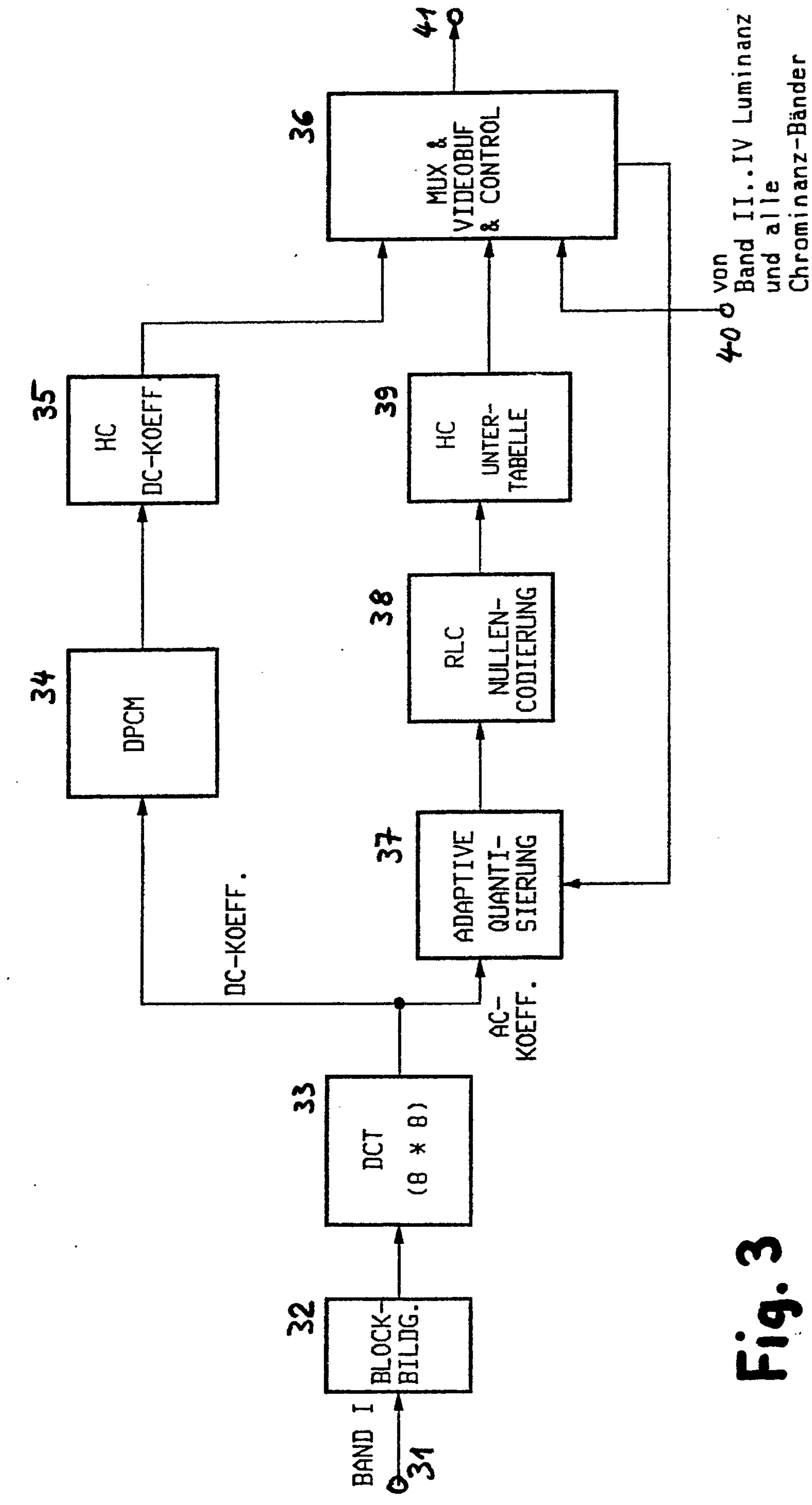
BAND I
31
32
BLOCK-
BILDG.
33
DCT
(8 * 8)
DC-KOEFF.
AC-
KOEFF.
34
DPCM
35
HC
DC-KOEFF.
37
ADAPTIVE
QUANTI-
SIERUNG
38
RLC
NULLEN-
CODIERUNG
39
HC
UNTER-
TABELLE
36
MUX &
VIDEOBUF
& CONTROL
41
40
von
Band II..IV Luminanz
und alle
Chrominanz-Bänder

Fig. 3

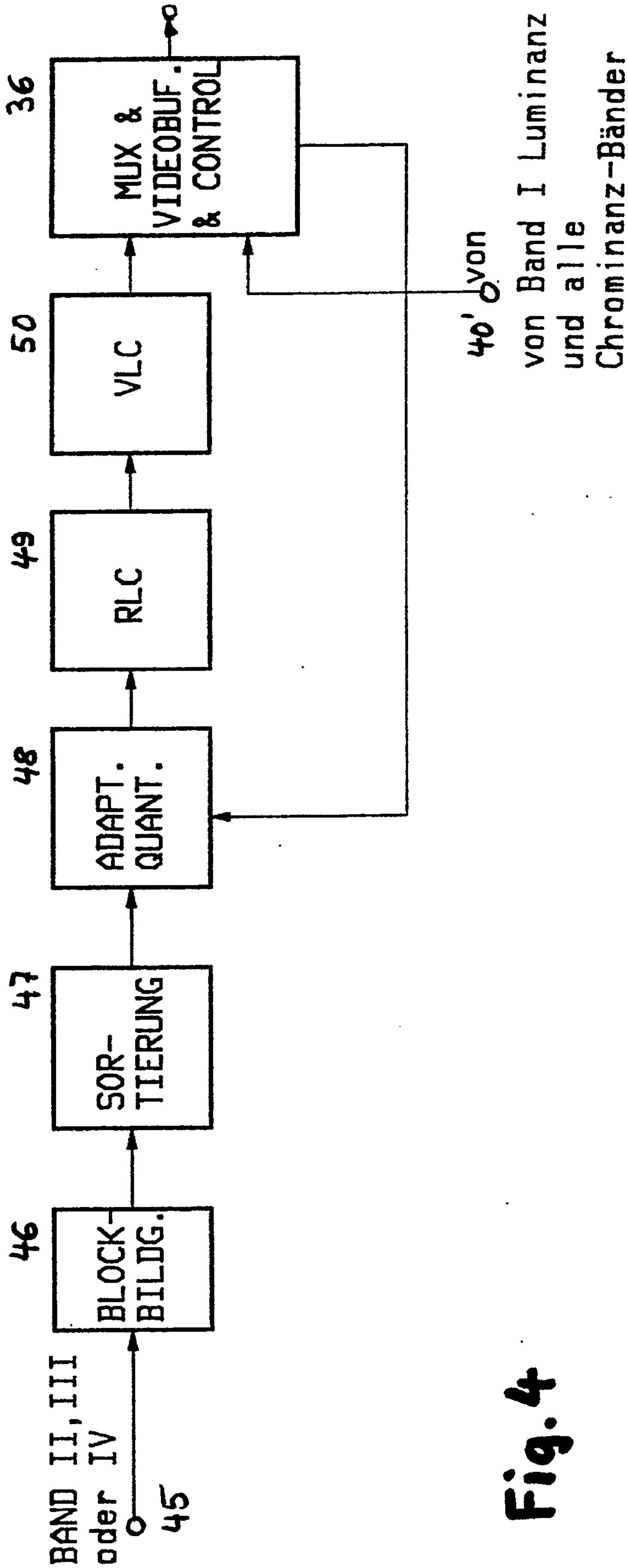

BAND II, III oder IV
45
46
BLOCK-BILDG.
47
SOR-TIERUNG
48
ADAPT. QUANT.
49
RLC
50
VLC
36
MUX & VIDEOBUF. & CONTROL
40'
von
von Band I Luminanz und alle Chrominanz-Bänder


Fig. 4

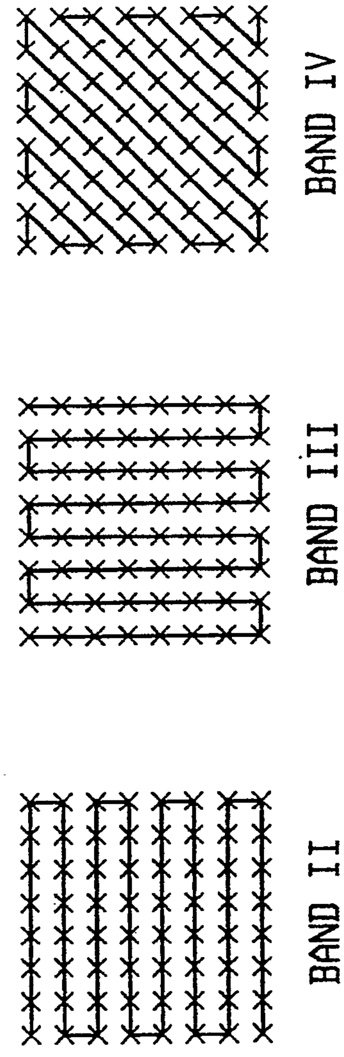

BAND II
BAND III
BAND IV


Fig. 5

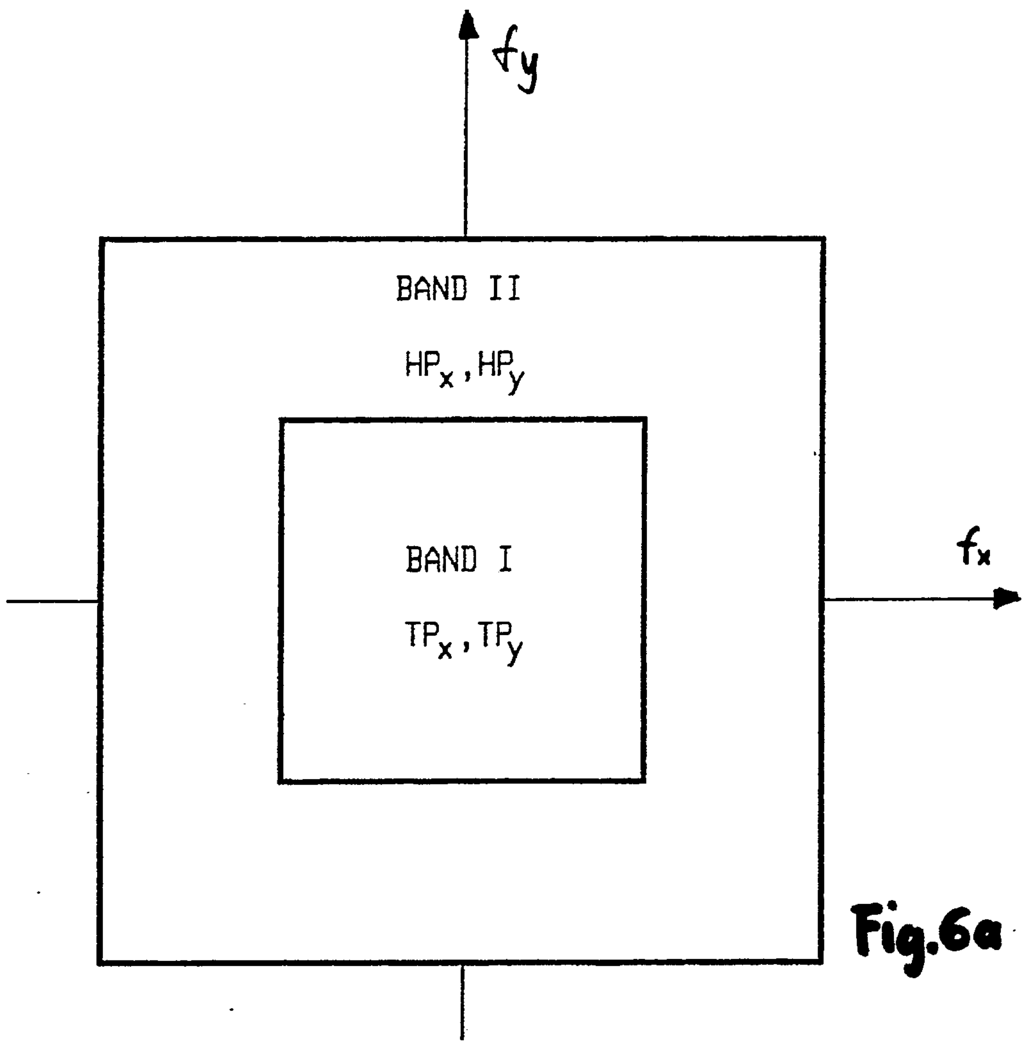
fy
BAND II
HPx , HPy
BAND I
TPx , TPy
fx

Fig.6a

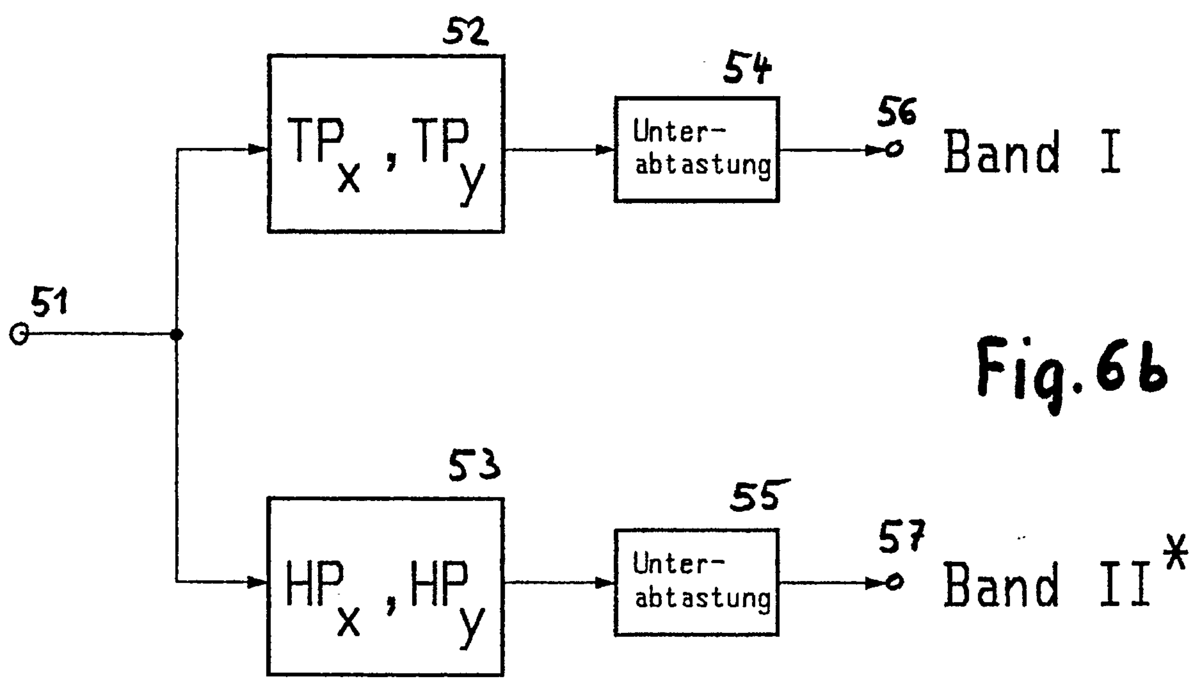
52
TPx , TPy
54
Unter-
abtastung
56
Band I
51
53
HPx , HPy
55
Unter-
abtastung
57
Band II*

Fig.6b

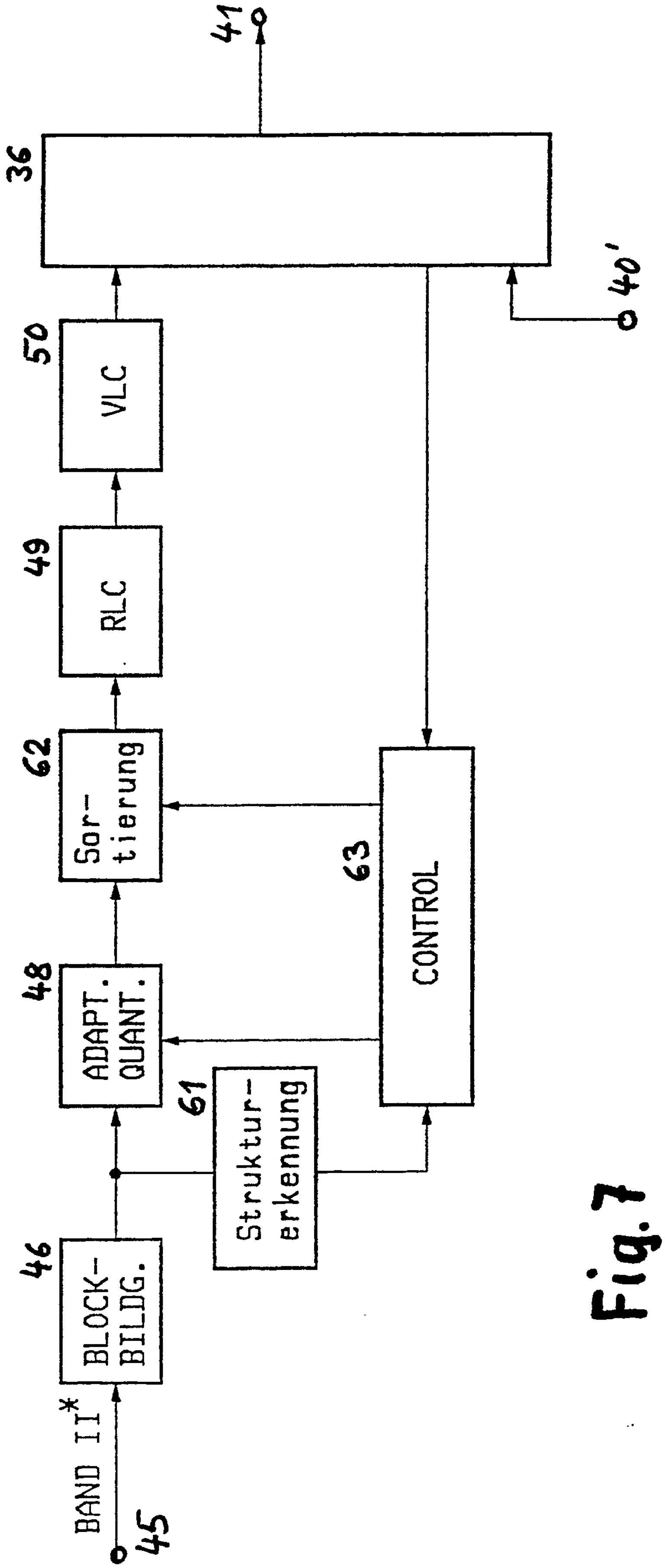
41
36
40'
50
VLC
49
RLC
62
Sor-
tierung
63
CONTROL
48
ADAPT.
QUANT.
61
Struktur-
erkennung
46
BLOCK-
BILDG.
BAND II*
45

Fig.7

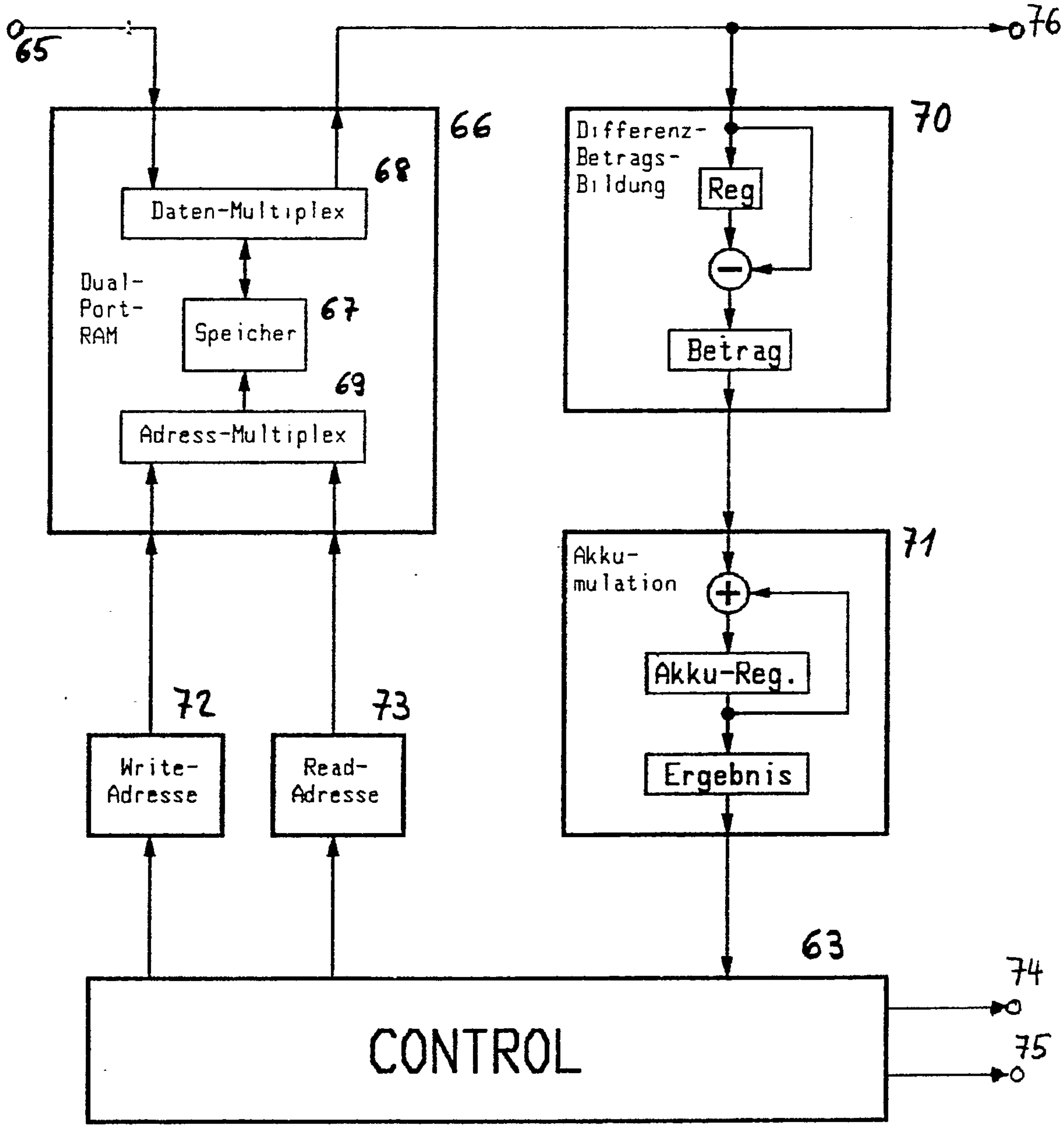
65
76
66
70
68
Daten-Multiplex
Differenz-
Betrags-
Bildung
Reg
Dual-
Port-
RAM
Speicher
67
69
Adress-Multiplex
Betrag
Akku-
mulation
71
Akku-Reg.
72
73
Write-
Adresse
Read-
Adresse
Ergebnis
63
74
75
CONTROL

Fig. 8

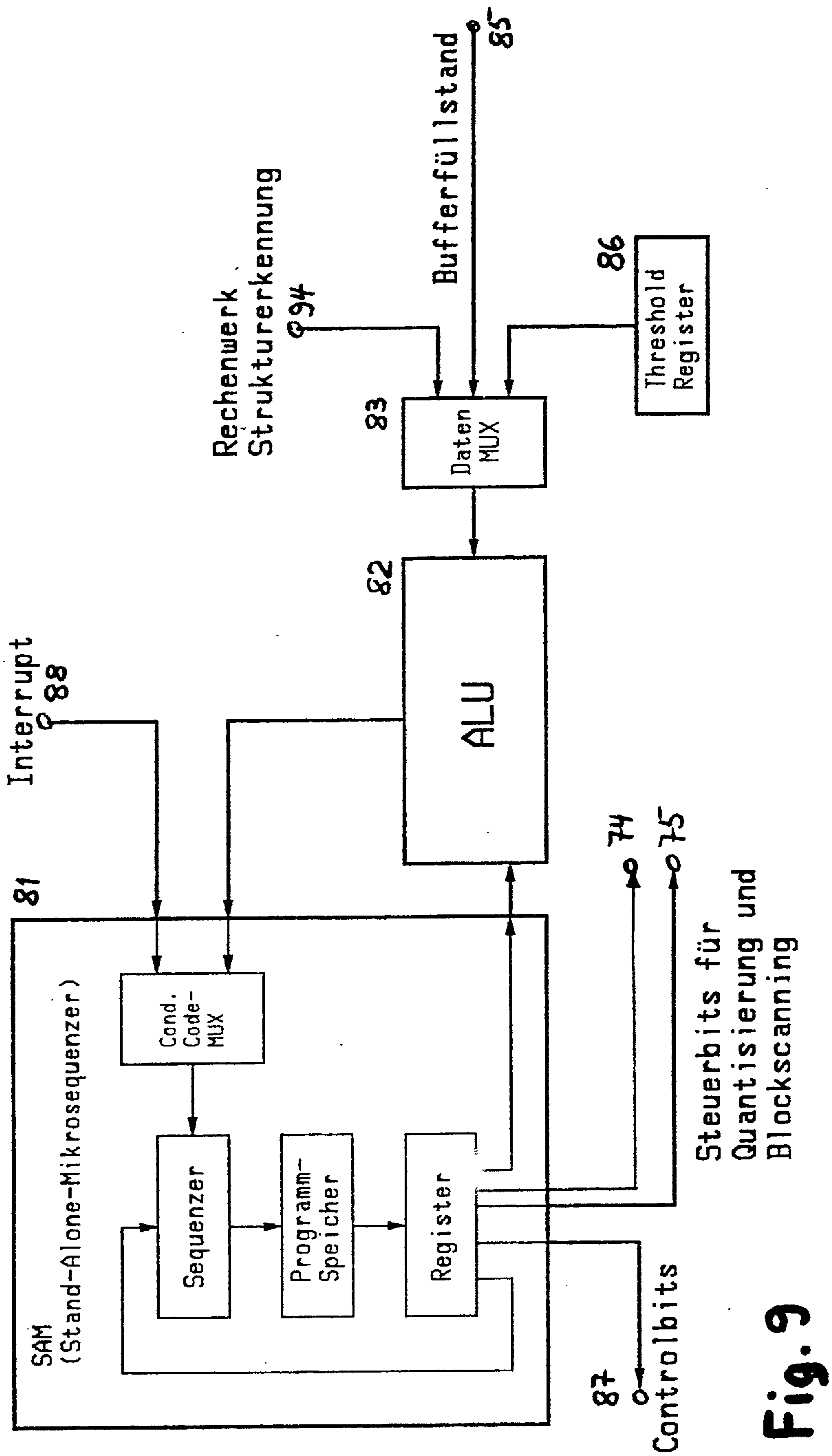
Bufferfüllstand
85
Rechenwerk
Strukturerkennung
94
86
Threshold
Register
83
Daten
MUX
82
ALU
Interrupt
88
81
SAM
(Stand-Alone-Mikrosequenzer)
Cond.
Code-
MUX
Sequenzer
Programm-
Speicher
Register
74
75
Steuerbits für
Quantisierung und
Blockscanning
87
Controlbits

Fig. 9

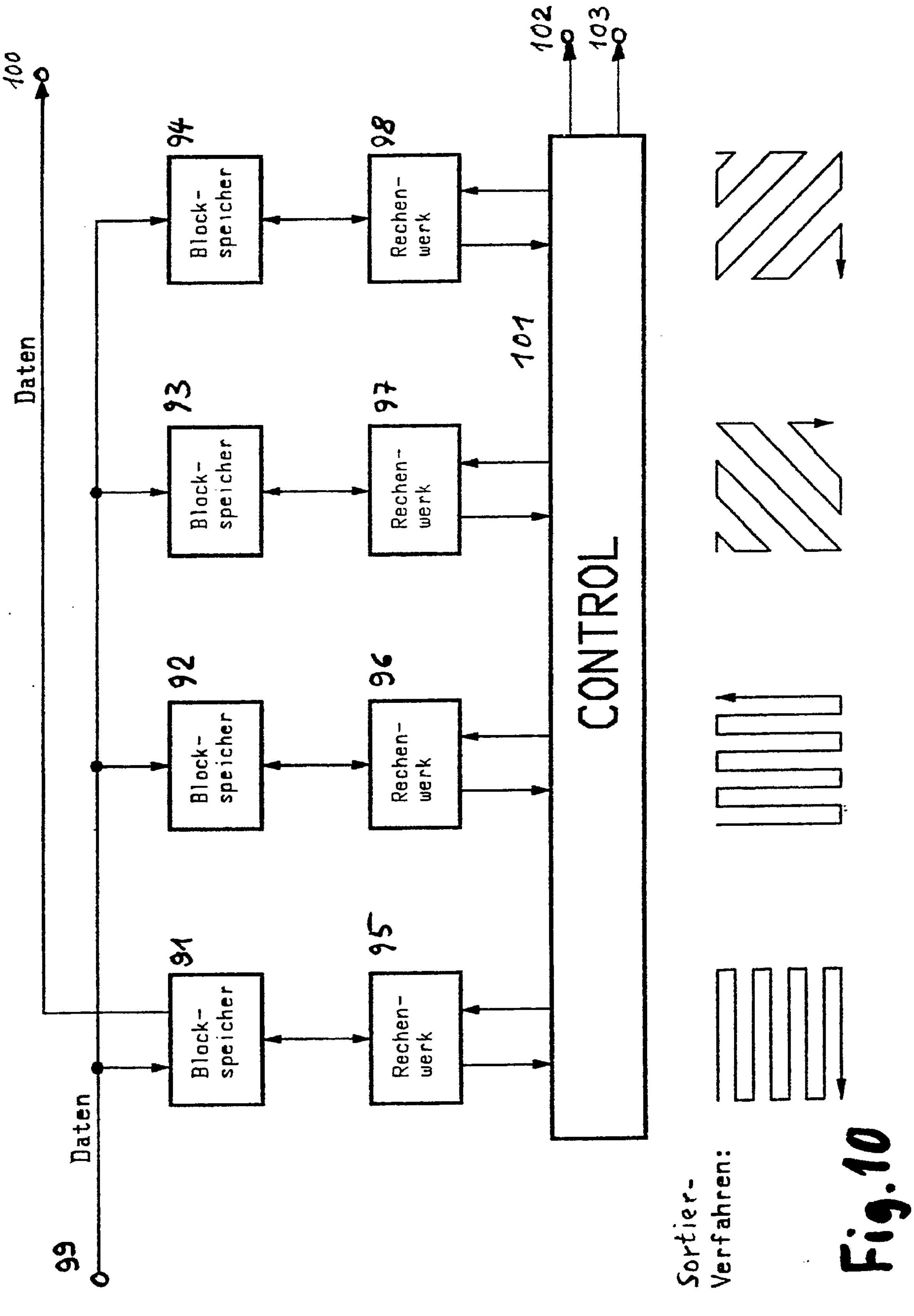
99
Daten
100
Daten
91
92
93
94
Block-
speicher
Block-
speicher
Block-
speicher
Block-
speicher
95
96
97
98
Rechen-
werk
Rechen-
werk
Rechen-
werk
Rechen-
werk
101
102
103
CONTROL
Sortier-
Verfahren:

Fig.10

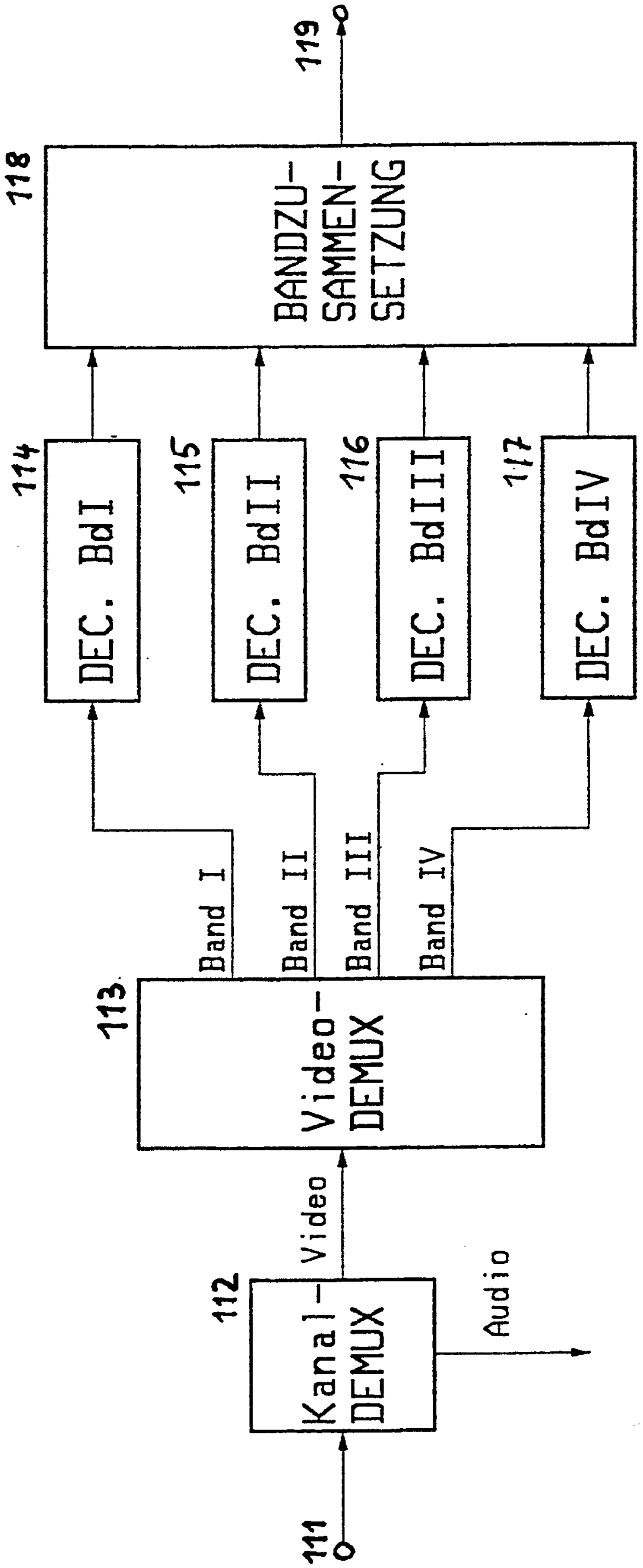
111
112
Kanal-DEMUX
Video
Audio
113
Video-DEMUX
Band I
Band II
Band III
Band IV
114
DEC. BdI
115
DEC. BdII
116
DEC. BdIII
117
DEC. BdIV
118
BANDZU-SAMMEN-SETZUNG
119

Fig. 11

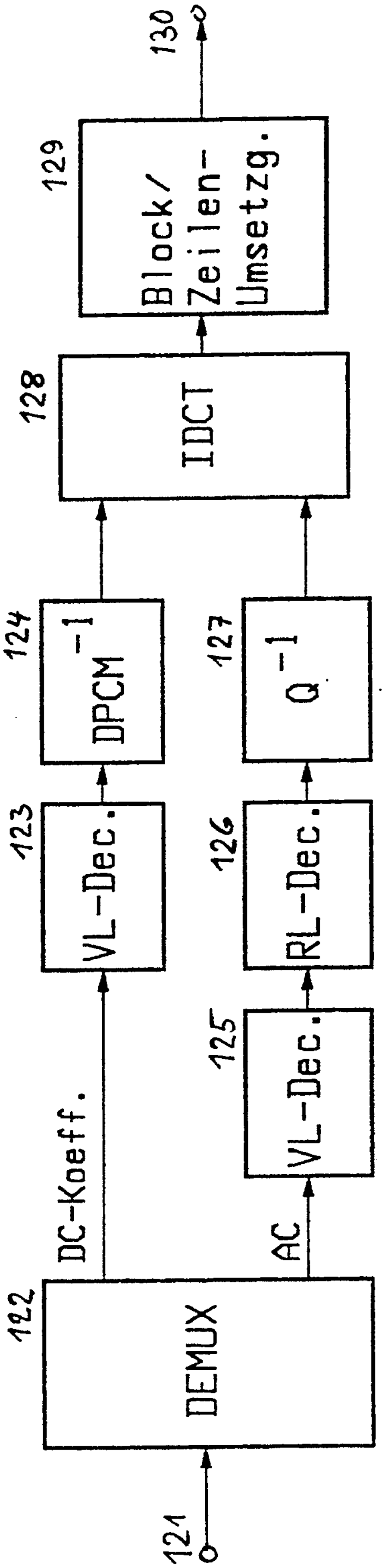
124
DEMUX
122
DC-Koeff.
AC
VL-Dec.
123
DPCM$^{-1}$
124
VL-Dec.
125
RL-Dec.
126
$Q^{-1}$
127
IDCT
128
Block/
Zeilen-
Umsetzg.
129
130

Fig. 12

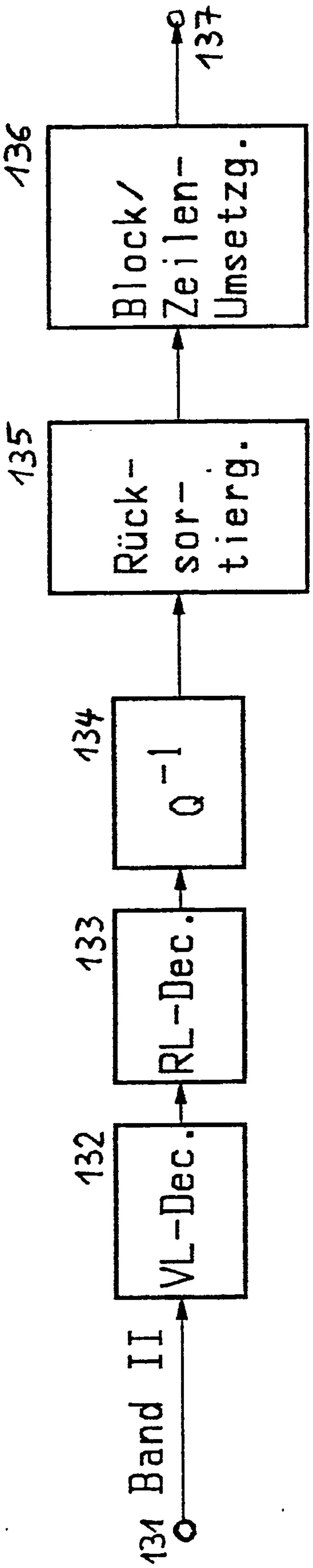
131
Band II
VL-Dec.
132
RL-Dec.
133
$Q^{-1}$
134
Rück-
sor-
tierg.
135
Block/
Zeilen-
Umsetzg.
136
137

Fig. 13